# EUROPEAN PATENT APPLICATION

(11) **EP 1 366 953 A1**
(43) Date of publication of application: **03.12.2003**
(21) Application number: 03076650.5
(22) Date of filing: 28.05.2003
(51) Int. Cl.: B60P 3/20

(54) **Container with detachable partitions, in particular of a means of transport**

(30) Priority: 30.05.2002 EP 02077122; 25.11.2002 NL 1021989
(71) Applicant: Roje Holding B.V., 2693 Ac 's-Gravenzande (NL)
(72) Inventor: Middelburg, Freddy, 2693 AC 's-Gravenzande (NL)
(74) Representative: Volmer, Johannes Cornelis

(57) **Abstract**

Container (14), in particular of a means of transport (10), having in the container (14) a loading space in which detachable partitions (50) can be fixed by fixing means in the longitudinal and transverse direction of the container (14). The fixing means comprise fixing components (32, 34, 36, 52, 54) that interact with each other and are provided on the partitions (50), on the one hand, and on the walls of the container (14), on the other hand. The container can be provided with a conditioning plant (18) with a control unit, in order to condition freight.

## Description

The invention relates to a container, in particular of a means of transport, comprising at least a bottom wall, a roof wall, and four vertical side walls, at least one of the side walls being provided with a loading opening, said walls together confining a loading space, the container being further provided with detachable partitions that can be fixed in the loading space by fixing means, the fixing means comprising fixing components that interact with each other and are provided on the partitions, on the one hand, and on the bottom wall and roof wall of the container, on the other hand.

Such a container that can be divided in several compartments is for instance disclosed in the European patent application EP-A-1048519, and is used for frozen or refrigerated transport, especially for transport of freight that demands different preservation temperatures. If the cooling system of the container is provided with a cooling equipment of several cooling stages of so-called evaporators, the required temperatures can be set and maintained in different compartments.

In the container according to EP-A-1048519, as a part of a truck, the detachable partitions can be positioned both in transverse and in longitudinal direction of the vehicle. The partitions possess a preferred width of one third of the internal width of the container. Spring-loaded sliding bolts are provided at the upper and underside in the corner areas of a partition. A control element is provided for synchronically controlling a group of said bolts at the upper and underside, so that in an unlocked situation of such a group, a partition can also function as a door to provide an entrance to a compartment. This possibility to pivot the partitions when unlocked, is also used in transferring the partitions. Freely swiveling wheels are provided at the underside of a partition to facilitate the pivoting motion of the partition. The floor and the bottom of the container may be provided with a rails with holes, in which the pins of the sliding bolts may be fixed. When not in use, the partitions can be positioned alongside the edges of the container.

A disadvantage of the known container with detachable partitions is that the proposed dimensioning is insufficiently versatile with respect to transporting products of different sizes. Products of the above-mentioned types namely, are typically being stocked on square (80x80 cm) rolling containers or rectangular (80x120 cm) pallets. In addition, the ease to handle the partitions, especially to manoeuvre these, leaves a lot to be desired, as motions are used during transferring that describe arcs of circles, which require a relatively high amount of space in the however limited space of the container. The positioning of the partitions is furthermore not simple.

The present invention aims at minimizing the above-mentioned disadvantages, in particular at providing a container that can in a simple manner be divided in compartments with a maximum of versatility.

With regard to the container of the type referred to in the preamble, the fixing components are, according to the invention, provided on the bottom wall and the roof wall of the container in at least five parallel rows, which are parallel to the longitudinal direction of the container, of which middle rows are situated halfway across the width of the container, and, on either side of said middle rows, at least two rows are situated that form a pair, wherein one row of each pair is situated at a distance from a side wall of the container that equals substantially one third of the width of the container, the distance between the two rows of a pair, measured between the fixing components of the rows, being equal to the distance between the fixing components of a partition and being smaller than the width of a partition, the fixing component at the underside of a partition being in the form of fixed pins.

In the container according to the invention partitions are used, which are provided at the underside with two fixed pins which are spaced apart. Fixed pins at the underside facilitate the initial positioning of a partition, as there is no need to handle a control for sliding bolts or the like with one free hand. Therefore, one can position the partition with both hands. After the underside of the partition is positioned, it is relatively simple to fix the upper side of the partition, using for example sliding bolts. In addition, a partition having fixed pins at the underside rests during initial positioning not on the (rubber) sealing strip that is commonly used to obtain a sound sealing between adjoining panels, as well as with the walls of the container, the roof and the bottom included. The ease to handle and manoeuvre the partitions is consequently of a high degree.
As such the positioning of the fixed fixing components at the underside of a partition, makes fixing of a partition in the fixing components at the bottom wall easy, wherein the fixation is concomitantly enhanced by the weight of a partition. The fixing between the bottom wall and the underside of a partition is also advantageous in case a load bumps against a partition while it is being shifted during loading into the container. During such a bump, the greatest force will normally be exerted upon the underside of the partition. The interacting fixing components at the underside of the partition, on the one hand, and on the bottom wall of the container, on the other hand, are also indicated in this description as first fixing components of the partition, and of the bottom wall, respectively. The container according to the invention comprises a middle row of fixing components, which enables to position partitions in the middle of the container in a longitudinal direction thereby dividing the container, wherein within at least one compartment rectangular pallets can be placed in transverse direction of the container. The container according to the invention thus enables to fix partitions in the longitudinal direction at half the width of the container and to fix at either side partitions in transverse direction. The container has a width that is sufficient to place two rectangular pallets next to each other in transverse direction over the width of the loading space, even when a partition is placed at half the width between pallets. At either side of the middle row two pairs of rows of fixing components are located. Typically the row of each pair that is adjacent to the middle row is situated in a container according to the invention which has standard dimensions, at a distance from the side wall of the container which is one third of the width of the container, so that using this specific row a compartment can be constituted that is suitable for the common square rolling containers or square pallets. Further, the distance between the fixing components of a partition is equal to the distance between the fixing components of such a pair of rows, and smaller than the width of a partition. For the sake of completeness, it is pointed out that the distance between two rows is meant as the distance in a direction perpendicular to the direction of the parallel rows. This feature enables to use the partions also for securing the freight - a function that is usually achieved by using retaining bars -, wherein the forces of the freight are not absorbed by the corners of a partion and transferred to the container such as in the container according to the above-mentioned European patent application, but are more evenly divided over the width of a partition. The detachable partitions enable a division of the container in compartments that is highly versatile in regard of form and dimensions.

The term "detachable" in this description is intended to convey that the partition is connected to the container in a non-permanent manner, and can consequently be moved easily, and may be removed temporarily from the container if desired. The partitions may be of an open design such as, for example, a lattice structure, or closed such as, for example, a bulkhead. For air-conditioned transport the partition is preferably of a thermally insulating design, for example in the form of a double-walled bulkhead with an insulating filling.

A container according to the invention thus comprises partitions that can be fixed in longitudinal and transverse direction, i.e. perpendicular to longitudinal direction of the container. This perpendicular orientation of partitions is advantageous when loads are placed on pallets, because the pallets themselves are rectangular, including a square form.

Advantageously, there are a large number of fixing components provided per row, which results in a large number of possibilities to fix detachable partitions in longitudinal and/or transverse direction. This is advantageous when the freight is partially sticking out of the circumference of the pallet or container, for example as a result of shifting during loading.

Preferably, the container according to the invention comprises fixing components, wherein the ratio R of the distance between fixing components of a partition to the distance between two adjacent fixing components provided on the container, measured in the longitudinal direction of the container, is an integer greater than or equal to 1, more preferably a multiple thereof. The higher the ratio R, the larger the number of possibilities to fix detachable partitions in longitudinal and transverse direction.

In a preferred embodiment the rows of fixing components on the container comprise strips provided with recesses. It is noted that the recesses also envisage apertures. Such a container has the advantage that fixing components need not to be fitted individually in the container. Thus, the strips may be the rows which are applied to the bottom wall and roof wall. For example, strips provided with recesses or apertures, can be used, which are known per se in the manufacturing of trailers in order to position retaining bars used for fixing a freight. The strips may be made of break-resistant materials known in the art, such as several metals or alloys thereof, fibre-reinforced plastics etc.. More preferably, the rows of fixing components comprise a rails with holes, commercially available from the company LOAD-LOK. These are advantageously fitted in a recessed manner, so that they do not form an obstacle during loading and unloading. The dimensions of the holes are slightly larger than the dimensions of the fixed pins of a partition in order to be able to position a partition - which when used spans virtually the complete height of the container - at an angle, and detach it thereafter. The holes are, for example, round, square or hexagonal in cross section. Generally, the fixed pins have a corresponding shape.

The container according to the invention is also provided with fixing components that interact with each other, on the roof wall, on the one hand, and at the upper side of a partition, on the other hand. These fixing components are also indicated in this description as second fixing components at the partition and on the roof wall respectively. The first and second fixing components achieve a fixing at the underside and at the upper side of a partition, wherein the partition is held with greater support in a fixed orientation in the container. This is particularly of importance when the container is applied to means of transport, where the load can shift and/or tilt during transport.

The container according to the invention preferably comprises fixing components that are positioned equally on the roof wall as on the bottom wall, and a partition that is provided at the upper side with two or more fixing components, the distance between the fixing components of two different rows being equal to the distance between the fixing components of a partition. Such a partition thus has the first and second fixing components at the same position at the underside and the upper side respectively, which allows to make the first and second fixing components of the partition of the same design. This simplifies the production of said components.

In another preferred embodiment of the container according to the invention, the fixing components of the partition at the upper side are movable pins. Such a partition can be detached in a simple manner by retracting the movable pins and lifting up the partition at a slight angle, in order to lift the fixed pins out of the fixing components of the bottom wall. The same applies vice versa when the partition is being placed back and fixed: the placing of the partition in the fixing components of the bottom wall can be performed in one operation at a slight angle, after which the partition is raised until the pins on the upper side can be drawn out into the fixing components of the roof wall. Placing the movable locks on the upper side means that they are generally easier to reach and to operate when a load has been disposed in the region of the partition. Examples of movable pins are locks with an open and a closed position, which are known per se and can be fitted on or in the partitions. Preferably the fixing components are spring-loaded sliding bolts, so that the sliding bolts can only be moved from a locked position into an open position by counteracting the force of the spring. In this embodiment of movable pins it is advantageous to protect the roof above the rails with holes by using a (metal) cover strip to prevent damage. The fixed and movable pins can be made of break-resistant materials known in the art, such as various metals or metal alloys, fibre-reinforced plastics etc.

Preferably the fixing components of a partition are situated in the longitudinal mid-section plane of the partition, so that the front- and backside have as little projecting parts as possible, which can easily be damaged or damage the freight. Also the controls of the movable fixing components are advantageously fitted in the front- and backside in a recessed manner, so that they do not form projecting parts. In order to avoid the need to distinguish between front- and backside of a partition during positioning, the controls are advantageously positioned mirror-symmetrically on either side of the partition.

Preferably, the width of a partition is virtually equal to half the width of the container minus the thickness of a partition. With such relatively wide partitions it is possible to quickly position partitions. When the container has to be divided in three compartments that are arranged parallel and in longitudinal direction of the container, only three (transversal) head walls having different dimensions are needed.

In another preferred embodiment of the container according to the invention, said container is provided with fixing components, for fixing partitions alongside the side walls of the container. Such a container has the advantage that partitions that do not need to be used during a part of the transport route, may be transported in the container while occupying a minimum part of the loading space, owing to the fact that these partitions can be disposed alongside the side walls of the container. Such fixing components can advantageously be designed in the same way as the first fixing components on the bottom wall and the second fixing components on the roof wall, such as described above. As an alternative, or in addition to the first and second fixing components in the case of such a container, third fixing components can also be provided on the side walls of the container. In such a case the partitions will also be provided with third fixing components interacting with them.

In a preferred embodiment of the container according to the invention, the edges of a partition are provided with a strip of flexible sealing material. In this way it is ensured that a partition connects in a sealing manner to adjoining partitions and to adjoining walls of the container. This is particularly advantageous in the case of a container wherein the differences in temperature between different compartments are relatively large. As a result of the sealing linkage of a partition, a compartment can be thermally insulated to a large extent. Examples of sealing material are brush strips and rubber strips, preferably rubber strips in the form of a U-section or H-section.

The container according to the invention is preferably provided with a conditioning plant with a control unit. Such a container is capable to condition freight, in general beween -25°C and +25°C, while the space that has to be air-conditioned can to a high extent be adapted to the size of the loads. It is more preferable for the conditioning plant to be provided with two or more evaporators for conditioning the compartments, so that a different cooling action can be achieved in different compartments. Such a container can be used for conditioned transport, such as frozen or refrigerated transport, especially for transport of freight that demands different conservation temperatures, e.g. a combination of deep-frozen products like ice-cream products, fresh products such as flowers and vegetables, and optionally other products that have to be preserved at ambient temperature.

The invention also relates to a partition, which is obviously intended for use in a container according to the invention.

The invention will be explained below with reference to the appended drawings of a preferred embodiment of the invention, in which:
Fig. 1 shows diagrammatically and in perspective a truck that is provided with a container according to the invention;
Fig. 2 shows diagrammatically a top view of a bottom wall of the container according to the invention;
Figs. 3 - 6 show diagrammatically the various types of detachable partitions that can be used in the container according to the invention;
Figs. 7 - 8 show a top view of the container, in which two different arrangements of the partitions have been used;
Fig. 9 shows diagrammatically a cross section of the underside of a partition when it is fixed on the bottom wall.

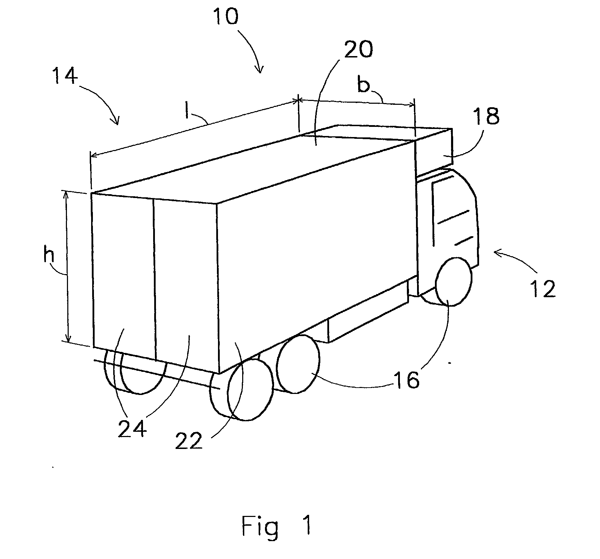

Figure 1 shows a truck 10 with a cab part 12 and a container 14. Cab 12 and container 14 are fitted on a chassis that is not visible in this view, on which chassis the wheels 16 are mounted. The truck 10 is equipped with an conditioning plant 18, which is fitted on the ouside of the container 14. The container 14 constructed of a roof wall 20 and opposite and parallel to it, a bottom wall of comparable dimensions, two parallel longitudinal side walls 22, only one of which is visible, a rear wall 24 and opposite and parallel to it, a front wall of comparable dimensions. Rear wall 24 is designed in two parts, each hingedly mounted as doors. The container has a height h, a length 1 and a width b.

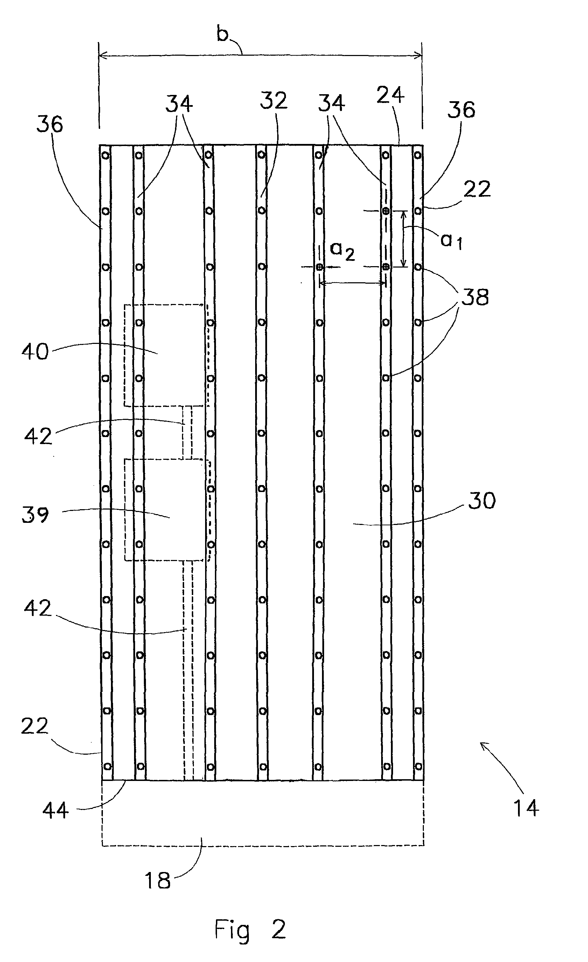

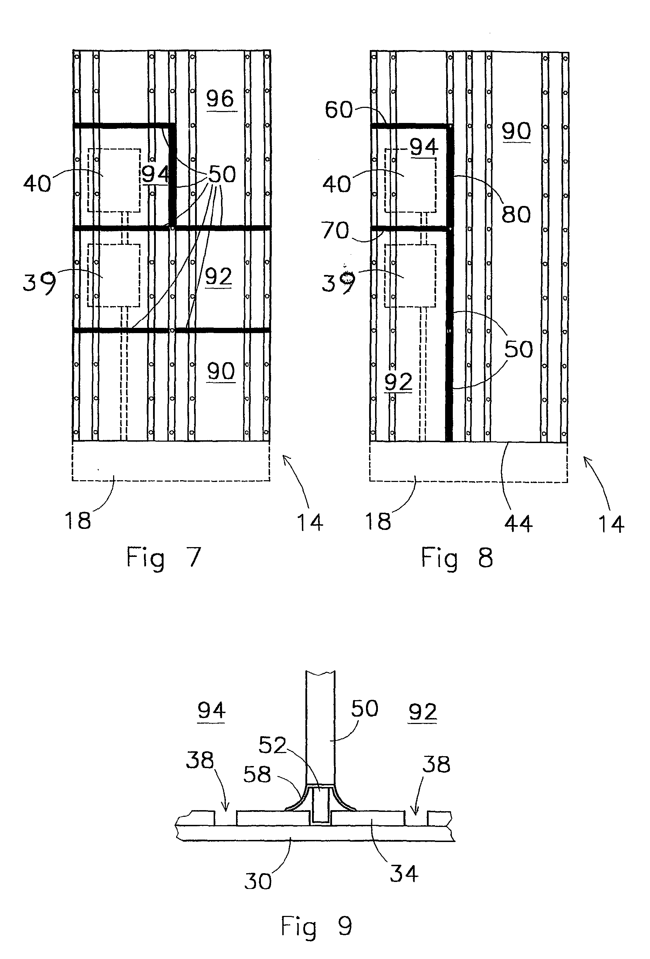

Figure 2 shows a bottom wall 30 of an embodiment of the container 14 according to the invention, which bottom wall is provided with metal strips 32, 34 and 36, e.g. from stainless steel, which are fitted parallel to each other and in the longitudinal direction of the container. The strips are provided with a large number of round recesses 38, which form one row, with a constant distance a₁ between the recesses 38. Strip 32 is fitted halfway across the width b of the container and thus forms a middle row of recesses 38. The four strips 34 form two pairs on either side of strip 32. The strips 34, which are situated adjacent to the middle strip 32, have a distance to the respective side walls, which is a third of the width of the container 14. At a internal width of 250 cm this implies that a pair strips 34 has to be positioned at a distance from the closest side wall of 39 and 84 cm respectively, taking into account the thickness of the partitions of approx. 3cm. The distance a₂ between the strips 32 is the same for each pair. The ratio R explained earlier is calculated by dividing distance a₁ by the distance a₂. For the sake of the clarity of the drawings, a₂ is twice the distance a₁. In practice, said distance a₂ is in fact a much greater multiple of a₁. In this embodiment, the two strips 36 are fitted adjoining the side walls 22, and serve as fixing components for fixing and temporary storage of partitions that are not being used, alongside the side walls 22. The function of the strips 32 and 34 for fixing partitions is explained in Figs. 7 - 8. In a comparable manner to that of the bottom wall 30, the roof wall 20 of the container is provided with steel strips in corresponding positions. In addition, two evaporators 39 and 40 are fitted against the roof wall, which evaporators are connected by way of pipes 42 to the conditioning plant 18. The positions of these parts of the conditioning system above the bottom wall 30 are shown by dotted line in Figure 2.

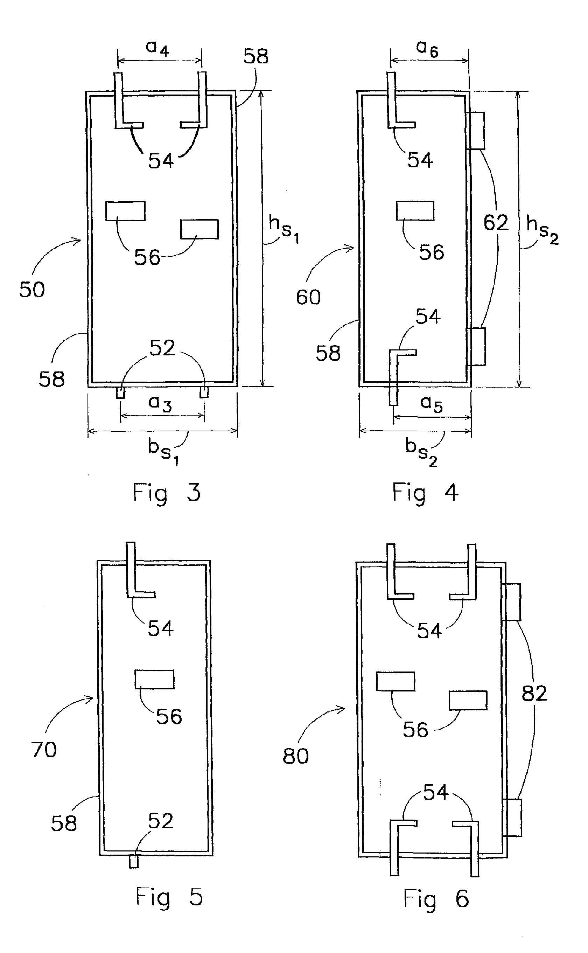

Figure 3 shows a detachable partition 50 with a heigh hₛ₁ and a width bₛ₁ of approx. 124 cm including a rubber circumfering edge 58 of approx. 22 mm. Partition 50 has fixed pins 52 at the underside and movable pins 54 at the upper side. The pins 52 and 54 are made of steel, and have a round cross section, the size of which is such that they fit within the inner circumference of the recesses of the strips 32, 34 and 36. The distance a₃ between the pins 52 is equal to the distance a₄ between the pins 54. The distances a₃ and a₄ are, in addition, equal to the distance a₂ between a pair of strips 34. Handles 56 are also provided for handling the partition 50, in particular during fixing and detaching respectively. The partition is provided on the edges and all around with a strip of flexible rubber sealing material 58.

In view of specific and aditional possibilities it may be desirable that one or more additional partitions are present in the container, which partitions are exemplified in figures 4-6.

Figure 4 shows a second type of partition 60, which is a variant of partition 50. Partition 60 has a height hₛ₂ that is equal to h_{s1,} a width bₛ₂ that is smaller than b_{s1,} is provided with only one movable pin 54 on the upper side and on the underside, and is on one vertical side provided with two first hinge components 62 of a hinged connecting means. The length a₅ and a₆ on the underside and upper side of the partition is equal to the distance a₂.

Figure 5 shows a third type of partition 70, which is virtually the same as partition 60, the only difference being that the two hinge components 62 are absent.

Figure 6 shows a fourth type of partition 80, which is virtually the same as partition 50, the only difference being that two second hinge components 82 of a hinged connecting means are fitted on one vertical side of the partition 80. The first hinge components 62 are, for example, hollow bushes, and the second hinge components 82 are pins that can be fitted into the bushes.

Figure 7 shows a top view of the container 14 with the partitions 50 disposed in it. The loading space of the container in this arrangement of the partitions 50 is divided into four compartments 90, 92, 94 and 96, the first three compartments of which are cooled to different temperatures by in succession the conditioning plant 18, the evaporator 39 and the evaporator 40, while the last compartment 96 is not conditioned.

Figure 8 shows in a manner comparable to that of Figure 7, an arrangement of a combination of partitions 50, 60, 80 and 40. Compartments 92 and 94 are conditioned by evaporators 39 and 40, while subspace 96 is conditioned by the conditioning plant 18. Owing to the use of partitions 60 and 70, the subspaces have a smaller width than in the arrangement in Figure 8. Partition 60 is hingedly connected to partition 80 by way of the first hinge components 62 and the second hinge components 82. Partition 60 therefore also has the function of a door that can be opened by retracting the movable pins 54. Partition 70 forms the dividing wall between compartments 92 and 94.

It is pointed out incidentally that the position of the parts of the conditioning system imposes some limitations on the possibilities for positioning partitions 50, 60, 70 and 80. Account has to be taken of this during designing.

Figure 9 shows a cross section of the underside of a partition 50, which is fixed on the bottom wall 30 in the transverse direction and halfway along the length, as shown in Figure 7. The fixed pin 52 is placed in one of the openings 38 of a strip 34, which is fitted on the bottom wall 30. The rubber sealing material with U-section 58 connects on either side of the pin 52 to the strip 34, so that the compartments 92 and 94 on either side of partition 50 are thermally insulated to a higher extent.

## Claims

1. Container, in particular of a means of transport, comprising at least a bottom wall, a roof wall, and four vertical side walls, at least one of the side walls being provided with a loading opening, said walls together confining a loading space, the container being further provided with detachable partitions that can be fixed in the loading space in the longitudinal direction of the container by fixing means, the fixing means comprising fixing components that interact with each other and are provided on the partitions, on the one hand, and on the bottom wall and the roof wall of the container, on the other hand, **characterized in that** the fixing components (38) on the bottom wall and the roof wall of the container (14) are provided in at least five parallel rows, which are parallel to the longitudinal direction of the container (14), of which middle rows are situated halfway across the width of the container (14), and, on either side of said middle rows, at least two rows are situated that form a pair, wherein one row of each pair is situated at a distance from a side wall of the container (14) that equals substantially one third of the width of the container (14), the distance between the two rows of a pair, measured between the fixing components (38) of the rows, being equal to the distance between the fixing components (52, 54) of a partition (50) and being smaller than the width of a partition (50), the fixing component (52) at the underside of a partition being in the form of fixed pins (52).

2. Container according to claim 1, **characterized in that** the ratio R of the distance between fixing components (52, 54) of a partition (50) to the distance between two adjacent fixing components (38) provided on the container (14), measured in the longitudinal direction of the container (14), is an integer greater than or equal to 1.

3. Container (14) according to claim 1 or 2, **characterized in that** the fixing components on the container (14) comprise strips (32, 34, 36) provided with recesses (38).

4. Container according to one of the preceding claims, **characterized in that** the fixing components at the upper side of a partition (50) are in the form of movable pins (54).

5. Container according to claim 4, **characterized in that** the movable pins (54) comprise spring-loaded sliding bolts.

6. Container according to one of the preceding claims, **characterized in that** the fixing components (52, 54) of a partition (50) are situated in the longitudinal mid-section plane of the partition.

7. Container according to one of the preceding claims, **characterized in that** controls for the movable fixing components (54) are positioned mirror-symmetrically on either side of the partition (50).

8. Container according to one of the preceding claims, **characterized in that** the width of a partition (50) is virtually equal to half the width of the container (14) minus the thickness of a partition (50).

9. Container according to one of the preceding claims, **characterized in that** fixing components (38) are fitted in the container (14), for fixing the partitions (50) alongside the side walls (22) of the container (14).

10. Container according to one of the preceding claims, **characterized in that** the edges of the partitions (50) are provided with a strip (58) of flexible sealing material.

11. Container according to one of the preceding claims, **characterized in that** the container (14) is provided with a conditioning plant (18) with a control unit.

12. Partition, obviously intended for use in a container according to one of the preceding claims, **characterized in that** the partition (50) at the underside and the upper side is provided with fixing components (52, 54) in such a way that during the positioning of the partition (50) in a transverse direction of the container (14), at least one fixing component (52) at the underside and one fixing component (54) at the upper side are situated at a distance of one third of the width of the container (14), wherein the fixing components (52) at the underside are in the form of fixed pins (52), and the distance between the fixing components (52, 54) is equal to the distance between a pair of rows of fixing components (38) which pair is situated adjacent to a middle row, of the container (14), and is smaller than the width of a partition (50).
